# EUROPÄISCHE PATENTSCHRIFT

(11) **EP 2 198 170 B1**
(45) Veröffentlichungstag und Bekanntmachung des Hinweises auf die Patenterteilung: **08.01.2014**
(21) Anmeldenummer: 08801532.6
(22) Anmeldetag: 07.08.2008
(51) Int. Cl.: F16B 19/10

(54) **VORRICHTUNG ZUM BEFESTIGEN EINES ANBAUTEILES AN EINEM TRÄGERTEIL**
DEVICE FOR FIXING AN ATTACHMENT TO A SUPPORTING PART
DISPOSITIF DE FIXATION D'UN APPENDICE SUR UN SUPPORT

(30) Priorität: 08.09.2007 DE 102007042873
(43) Veröffentlichungstag der Anmeldung: 23.06.2010
(73) Patentinhaber: A. RAYMOND ET CIE, 38000 Grenoble (FR)
(72) Erfinder: HAUSER, Ingo, 79400 Kandern (DE)
(74) Vertreter: RACKETTE Partnerschaft Patentanwälte
(86) Internationale Anmeldenummer: PCT/EP2008/006492
(87) Internationale Veröffentlichungsnummer: WO 2009/030334

(56) Entgegenhaltungen:
- WO-A-2006/012928
- FR-A- 2 442 368
- US-A1- 2005 097 851
- US-A1- 2006 032 031
- US-A1- 2006 066 080

## Beschreibung

Die Erfindung betrifft eine Vorrichtung zum Befestigen eines Anbauteiles an einem Trägerteil gemäß dem Oberbegriff des Patentanspruches 1.

Eine derartige Vorrichtung ist aus WO 20061012928 A1 bekannt. Die vorbekannte Vorrichtung zum Befestigen eines Anbauteiles an einem Trägerteil verfügt über einen Nietkörper, der eine Kopfplatte und eine an der Kopfplatte angeformte Versenksäule aufweist, an der an elastisch federnden, einander gegenüberliegenden Federzungen nach außen vorstehende Rastnasen ausgebildet sind. Weiterhin ist ein in dem Nietkörper verschiebbarer Verschiebestift vorhanden, der in einer Fixierstellung das Einfedern der Rastnasen nach innen blockiert, wobei in einer auch nur teilweise eingeschobenen Anordnung des Verschiebestiftes die Rastnasen nach außen vorstehen und zum Hintergreifen eines Trägerteiles eingerichtet sind.

Eine weitere Vorrichtung zum Befestigen eines Anbauteiles an einem Trägerteil ist beispielsweise aus DE 39 31 180 A1 bekannt. Diese Vorrichtung verfügt über einen Nietkörper, der eine Kopfplatte und eine an der Kopfplatte angeformte Versenksäule aufweist, an der an elastisch federnden, einander gegenüberliegenden Federzungen nach außen abstehende Rastnasen ausgebildet sind. Weiterhin ist ein in dem Nietkörper verschiebbarer Verschiebestift vorhanden, der in einer Fixierstellung das Einfedern der Rastnasen nach innen blockiert. Dadurch ist die Vorrichtung in der eingeschobenen Fixierstellung des Verschiebestiftes mit einer sehr hohen Auszugskraft verankert.

Der Erfindung liegt die Aufgabe zugrunde, eine Vorrichtung der eingangs genannten Art anzugeben, die sich auch bei einer Verankerung mit einer sehr hohen Auszugskraft wieder verhältnismäßig leicht entfernen lässt.

Diese Aufgabe wird bei einer Vorrichtung der eingangs genannten Art erfindungsgemäß mit den kennzeichnenden Merkmalen des Patentanspruches 1 gelöst.

Durch das Zusammenwirken der Manipulationsnasen und der Einwirkelemente gemäß der Erfindung sind in der Fixierstellung des Verschiebestiftes die Federzungen am Einfedern gehindert, während in der Demontageausrichtung des Verschiebestiftes die Rastnasen aufgrund der Einwirkelement so weit nach innen eingefedert sind, dass eine im wesentlichen kräftefreie Entnahme der Vorrichtung aus der Anordnung von Trägerteil und Anbauteil geschaffen ist.

Weitere zweckmäßige Ausgestaltungen der Erfindung sind Gegenstand der Unteransprüche.

Aus der nachfolgenden Beschreibung eines bevorzugten Ausführungsbeispiels der Erfindung unter Bezug auf die Figuren der Zeichnung ergeben sich weitere zweckmäßige Ausgestaltungen und Vorteile. Es zeigen:
- Fig. 1: in einer perspektivischen Ansicht ein Ausführungsbeispiel einer erfindungsgemäßen Vorrichtung mit einem teilweise in einen Nietkörper eingeschobenen Verschiebestift,
- Fig. 2: in einer perspektivischen Ansicht den Nietkörper des Ausführungsbeispieles gemäß Fig. 1 mit Blick auf Manipulationsnasen,
- Fig. 3: in einer ersten perspektivischen Ansicht den Verschiebbestift des Ausführungsbeispieles gemäß Fig. 1,
- Fig. 4: in einer weiteren perspektivischen Ansicht den Verschiebestift des Ausführungsbeispieles gemäß Fig. 1,
- Fig. 5: in einer ersten Schnittansicht das Ausführungsbeispiel gemäß Fig. 1 in einer in eine Anordnung eines Trägerteiles und eines Anbauteiles eingefügten Anordnung mit einem in einer Montageausrichtung teilweise in den Nietkörper eingeschobenen Verschiebestift,
- Fig. 6: in der ersten Schnittansicht gemäß Fig. 5 das Ausführungsbeispiel gemäß Fig. 1 in der in der Anordnung des Trägerteiles und des Anbauteiles gemäß Fig. 5 eingefügten Anordnung mit einem in der Montageausrichtung vollständig in den Nietkörper eingeschobenen Verschiebestift in einer Fixierstellung,
- Fig. 7: in einer weiteren Schnittansicht das Ausführungsbeispiel gemäß Fig. 1 in der in die Anordnung des Trägerteiles und des Anbauteiles gemäß Fig. 5 und Fig. 6 eingefügten Anordnung mit dem teilweise in den Nietkörper eingeschobenen Verschiebestift in einer Demontageausrichtung vor Eintritt einer Entriegelungswirkung und
- Fig. 8: in der weiteren Schnittansicht gemäß Fig. 7 das Ausführungsbeispiel gemäß Fig. 1 in der in die Anordnung des Trägerteiles und des Anbauteiles gemäß Fig. 5 bis Fig. 7 eingefügten Anordnung mit dem in der Demontageausrichtung in den Nietkörper eingeschobenen Verschiebestift in einer Freigabestellung bei vollem Eintritt der Entriegelungswirkung.

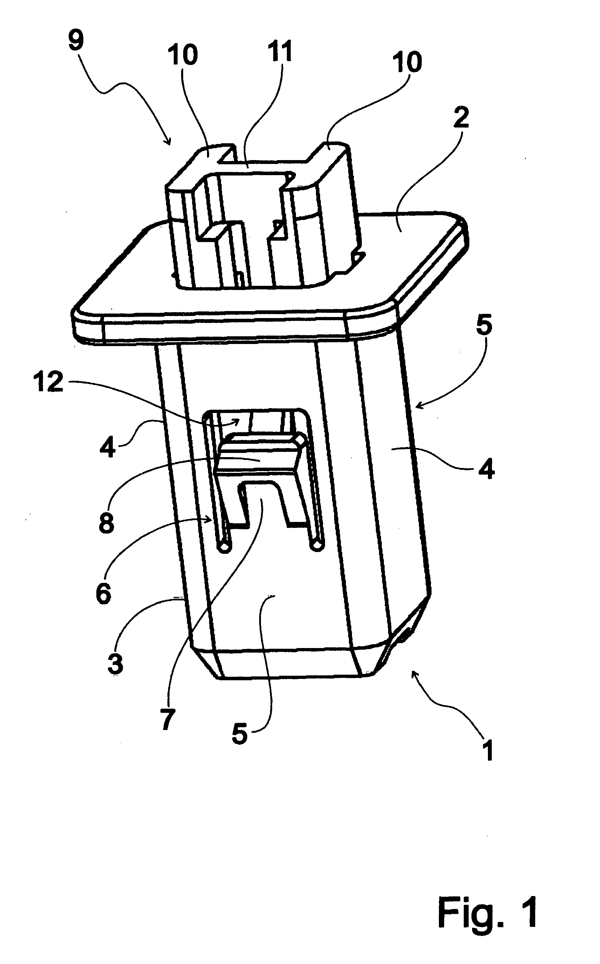

Fig. 1 zeigt in einer perspektivischen Ansicht ein aus einem hartelastischen Kunststoffmaterial hergestelltes Ausführungsbeispiel einer erfindungsgemäßen Vorrichtung, die über einen Nietkörper 1 verfügt, der bei diesem Ausführungsbeispiel eine flache Kopfplatte 2 mit einer im wesentlichen quadratischen Grundform sowie eine im Querschnitt ebenfalls im wesentlichen quadratische, gegenüber der Kopfplatte 2 im Querschnitt jedoch kleinere längliche Versenksäule 3 aufweist. Die Versenksäule 3 ist an die Kopfplatte 2 angeformt und durch zwei einander gegenüberliegende, glattwandige Seitenwände 4 sowie durch zwei ebenfalls einander gegenüberliegende sowie zwischen den glattwandigen Seitenwänden 4 angeordnete durchbrochene Seitenwände 5 gebildet. In den jeweils durch eine U-förmige Freimachung 6 durchbrochenen Seitenwänden 5 sind mit ihren freien Enden in Richtung der Köpfplatte 2 weisende, elastisch federnde Federzungen 7 ausgebildet, an deren freien Enden jeweils eine nach außen vorstehende Rastnase 8 angeformt ist.

Weiterhin ist das erfindungsgemäße Ausführungsbeispiel gemäß Fig. 1 mit einem länglichen Verschiebestift 9 ausgestattet, der in seiner Grundform außenseitig zwei Seitenwangen 10 und einen sich mittig zwischen den Seitenwangen 10 erstreckenden Mittelsteg 11 aufweist. In der Darstellung gemäß Fig. 1 ist der Verschiebestift 9 teilweise in einen innenseitig von Seitenwänden 4, 5 umschlossenen Aufnahmehohlraum 12 eingeschoben, wobei aus Fig. 1 ersichtlich ist, dass die Seitenwangen 10 und der Mittelsteg 11 so dimensioniert sind, dass der Verschiebestift 9 im wesentlichen spielfrei in dem Aufnahmehohlraum 12 angeordnet ist.

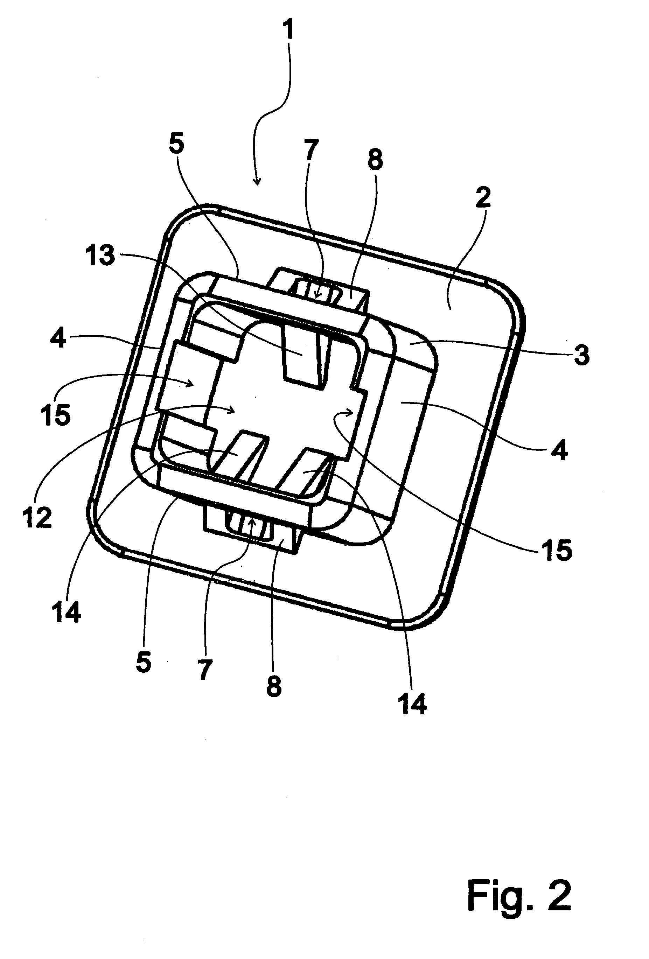

Fig. 2 zeigt in einer perspektivischen Ansicht den Nietkörper 1 des Ausführungsbeispieles gemäß Fig. 1 mit Blick auf das der Kopfplatte 2 abgewandte Ende der Versenksäule 3. Aus der Perspektive der Fig. 2 ist ersichtlich, dass an einer Federzunge 7 auf der dem Aufnahmehohlraum 12 zugewandten Innenseite in der Mitte eine mittige Manipulationsnase 13 und an der anderen Federzunge 7 randseitig zwei seitliche Manipulationsnasen 14 ausgebildet sind, die sich von der Federzunge 7, an der sie angebracht sind, in Richtung der gegenüberliegenden Federzunge 7 schräg zu der Kopfplatte 2 erstrecken.

Weiterhin lässt sich aus der Perspektive von Fig. 2 erkennen, dass die glattwandigen Seitenwänden 4 an ihren dem Aufnahmehohlraum 12 zugewandten Innenseiten sich in Längsrichtung erstreckende und zu der Kopfplatte 2 offene Gleitnuten 15 aufweisen, die bei diesem Ausführungsbeispiel bis zu dem der Kopfplatte 2 abgewandten Ende der Versenksäule 3 durchgehen.

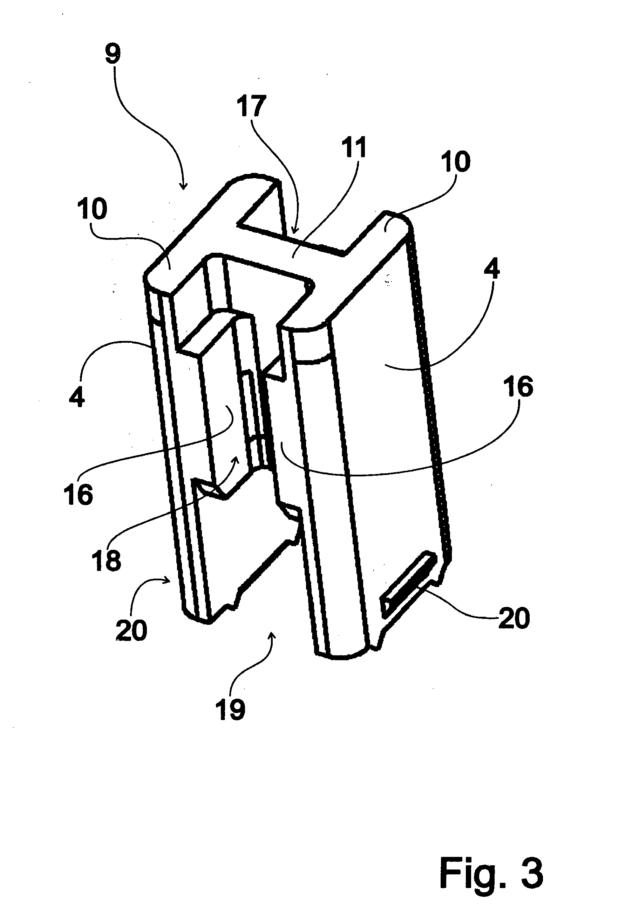

Fig. 3 zeigt in einer ersten perspektivischen Ansicht den Verschiebestift 9 des Ausführungsbeispieles gemäß Fig. 1. In der Ansicht gemäß Fig. 3 lässt sich erkennen, dass auf einer Seite des Mittelstegs 11 an den Innenseiten der Seitenwangen 10 vorstehende Seitenblöcke 16 ausgebildet sind, die sich in Längsrichtung etwa von der Mitte des Verschiebestiftes 9 in Richtung eines Handhabungsendes 17 des Verschiebestiftes 9 erstrecken und in einem Abstand von dem Handhabungsende 17 enden. Der Abstand zwischen den Seitenblöcken 16 ist gleich der Breite der mittigen Manipulationsnase 13 oder etwas größer als die Breite der mittigen Manipulationsnase 13, so dass für die mittige Manipulationsnase 13 eine Aufnahmenut 18 ausgebildet ist. An einem dem Handhabungsende 10 gegenüberliegenden Einsteckende 19 sind an Seitenwangen 10 jeweils eine nach außen überstehende Arretiernase 20 ausgebildet.

Aus Fig. 3 ist ersichtlich, dass sich der Mittelsteg 11 von dem Handhabungsende 17 bis etwa in die Mitte der Seitenwangen 10 erstreckt, so dass die die Arretiernasen 20 tragenden Enden der Seitenwangen 10 bis zu einem gewissen Grad elastisch federnd sind.

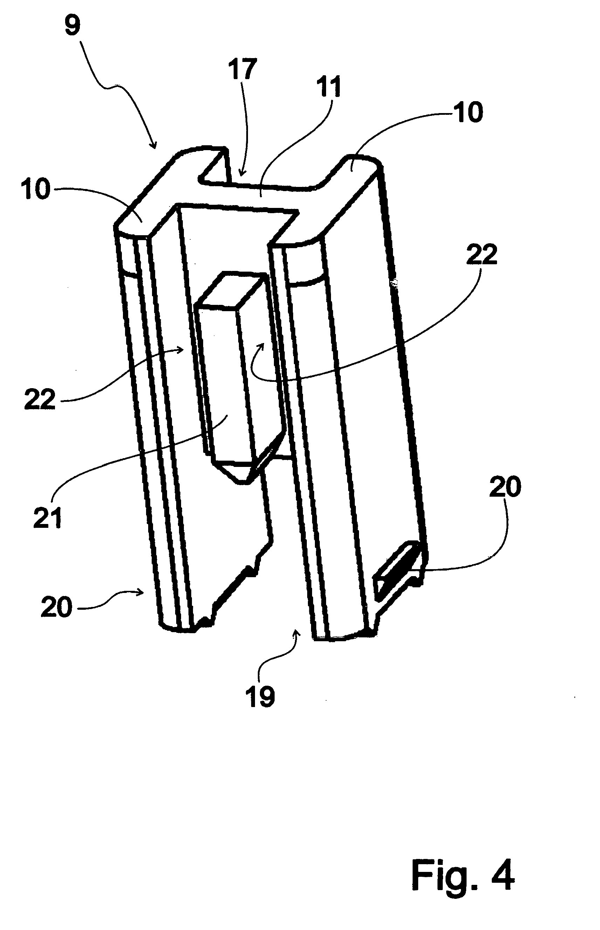

Fig. 4 zeigt in einer weiteren perspektivischen Ansicht den Verschiebestift 9 des Ausführungsbeispieles gemäß Fig. 1 mit Blick auf die in der Perspektive von Fig. 3 nicht sichtbare Seite des Mittelsteges 11. Aus Fig. 4 lässt sich erkennen, dass auf der den Seitenblöcken 16 abgewandten Seite des Mittelsteges 11 an dem Mittelsteg 11 mittig ein Mittelblock 21 angeformt ist, der sich von dem Mittelsteg 11 in Richtung des Handhabungsendes 17 erstreckt und in einem Abstand von dem Handhabungsende 17 endet. Der Abstand zwischen den Seitenwangen 10 und dem Mittelblock 21 entspricht jeweils der Breite der seitlichen Manipulationsnasen 14 oder ist geringfügig größer als die Breite der seitlichen Manipulationsnasen 14, so dass auch für die seitlichen Manipulationsnasen 14 Aufnahmenuten 22 ausgebildet sind.

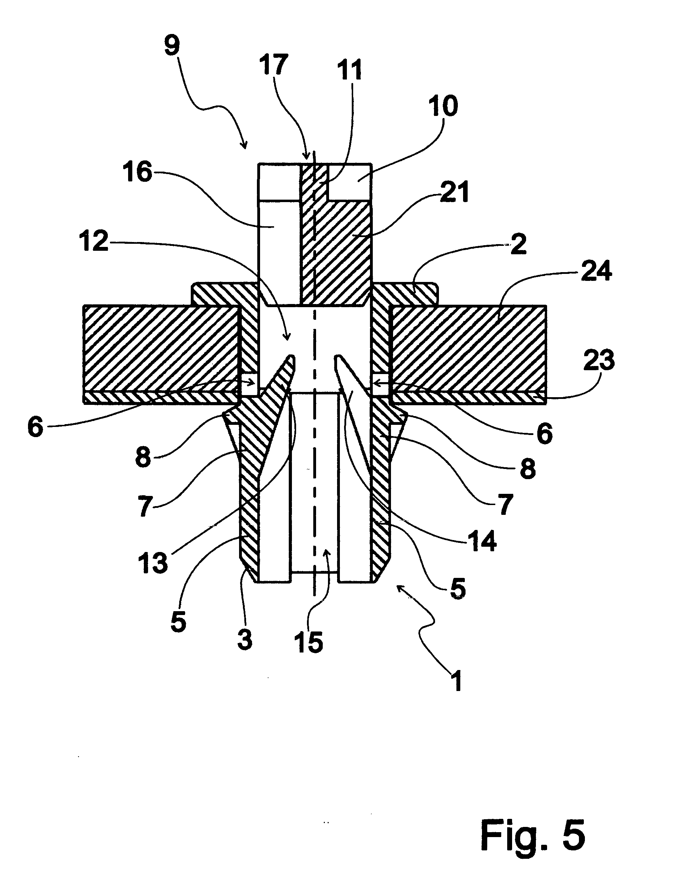

Fig. 5 zeigt in einer ersten Schnittansicht das Ausführungsbeispiel gemäß Fig. 1 in einer in eine Anordnung eines Trägerteiles 23 und eines Anbauteiles 24 eingefügten Anordnung mit einem teilweise in den Nietkörper 1 eingeschobenen Verschiebestift 9, der in einer Montageausrichtung in den Nietkörper 1 eingeschoben ist. In der Anordnung gemäß Fig. 5 hintergreifen die Rastnasen 8 das Trägerteil 23, während die Kopfplatte 2 auf der dem Trägerteil 23 abgewandten Seite des Anbauteiles 24 aufliegt.

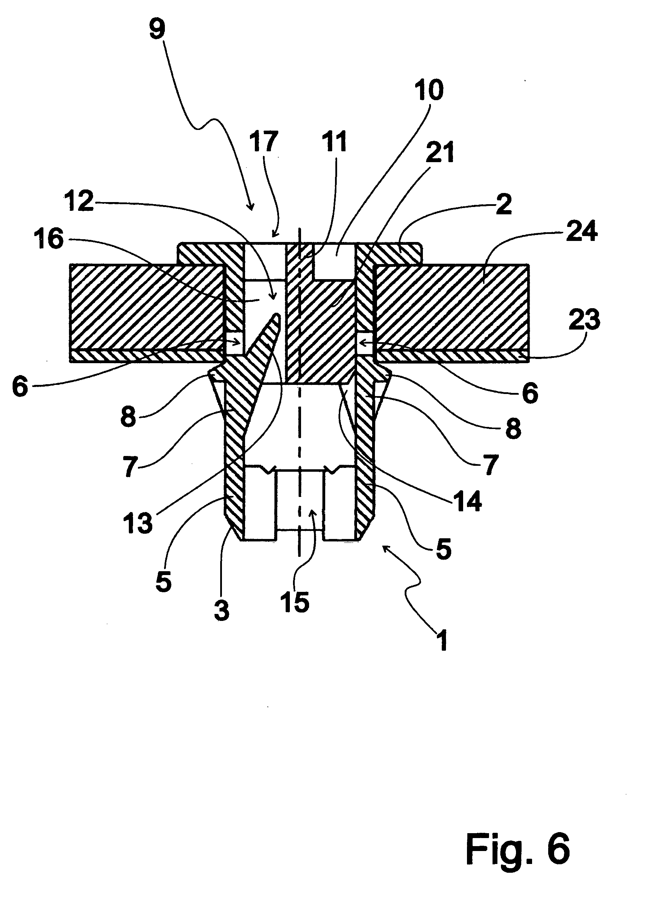

Fig. 6 zeigt in der ersten Schnittansicht gemäß Fig. 5 das Ausführungsbeispiel gemäß Fig. 1 in der in der Anordnung des Trägerteiles 23 und des Anbauteiles 24 gemäß Fig. 5 eingefügten Anordnung mit einem in der Montageausrichtung vollständig in den Nietkörper 1 eines eingeschobenen Verschiebestift 3 in einer Fixierstellung, in der der Mittelsteg 11 in unmittelbarer Nähe der freien Enden der in den Aufnahmenuten 18, 22 liegenden Manipulationsnasen 13, 14 angeordnet ist. Dadurch sind die Federzungen 7 und damit die Rastnasen 8 gegenüber einem Einfedern blockiert, so dass die erfindungsgemäße Vorrichtung mit einer hohen Auszugskraft mit den Rastnasen 8 das Trägerteil 21 hintergreift.

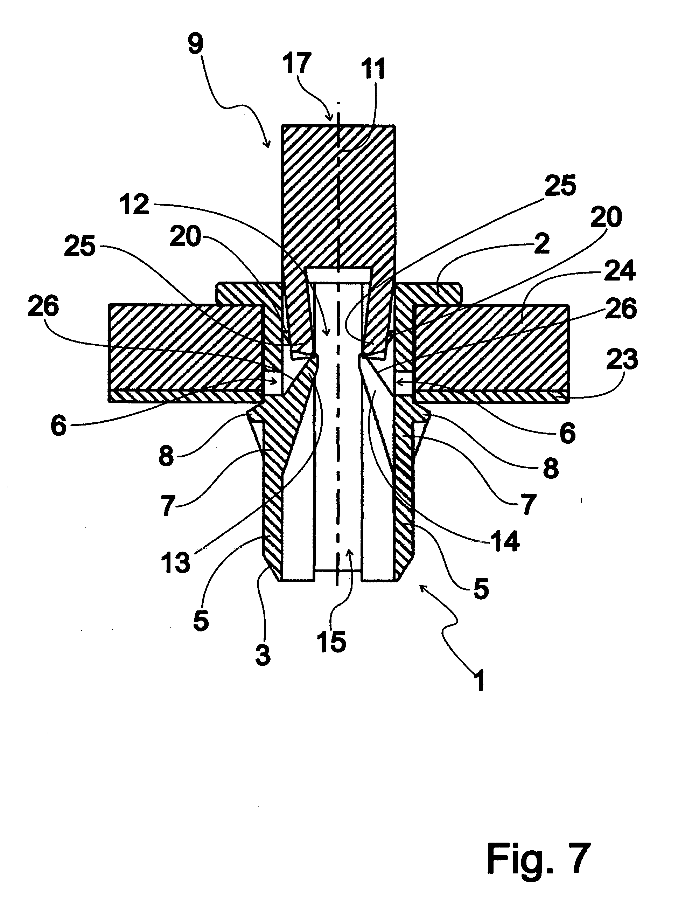

Fig. 7 zeigt in einer weiteren Schnittansicht das Ausführungsbeispiel gemäß Fig. 1 in einer in die Anordnung des Trägerteiles 23 und des Anbauteiles 24 gemäß Fig. 5 und Fig. 6 eingefügten Anordnung mit dem teilweise in den Nietkörper 1 eingeschobenen, durch Ansetzen beispielsweise einer nicht dargestellten Spitzzange an dem Mittelsteg 11 an dem Handhabungsende 17 aus der Anordnung gemäß Fig. 6 herausgezogenen Verschiebestift 9 in einer Demontageausrichtung, die gegenüber der Montageausrichtung gemäß Fig. 5 und Fig. 6 um 90 Grad gedreht ist, vor Eintritt einer Entriegelungswirkung. Aus Fig. 7 ist ersichtlich, dass in der Demontageausrichtung als Einwirkelemente die Arretiernasen 20 tragenden Einwirkenden 25 der Seitenwangen 10 geringfügig nach innen eingefedert sind und an der Kopfplatte 2 zugewandten, von der jeweiligen Federzunge 7 wegweisend in Richtung der Kopfplatte 2 ansteigenden schrägen Einwirkflächen 26 der Manipulationsnasen 13, 14 anliegen.

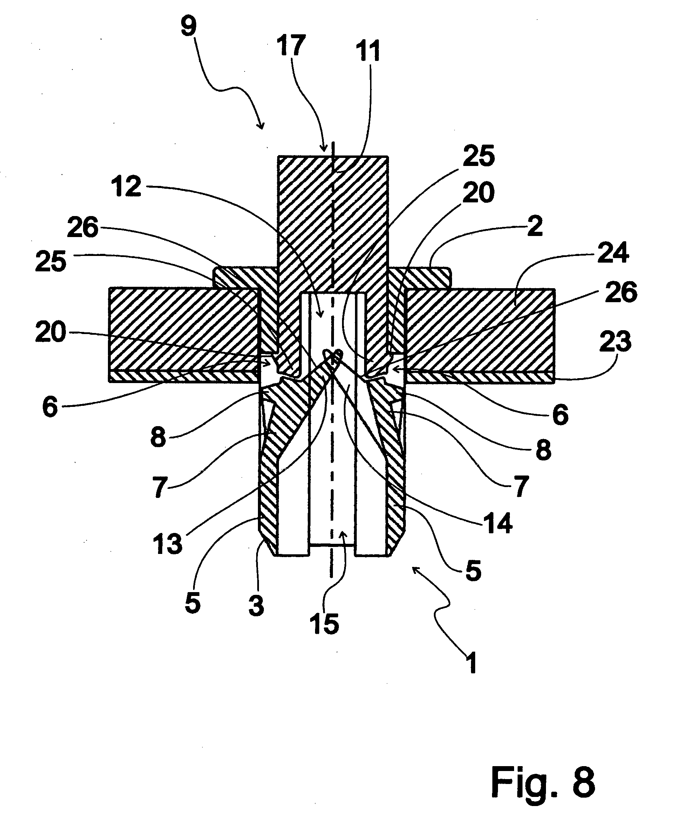

Fig. 8 zeigt in der weiteren Schnittansicht gemäß Fig. 7 das Ausführungsbeispiel gemäß Fig. 1 in der in die Anordnung des Trägerteiles 23 und des Anbauteiles 24 gemäß Fig. 5 bis Fig. 7 eingefügten Anordnung mit dem in der Demontageausrichtung in den Nietkörper 1 eingeschobenen Verschiebestift 9 in einer Freigabestellung bei vollem Eintritt der Entriegelungswirkung. In der Freigabestellung sind unter Festlegen des Verschiebestiftes 9 gegenüber dem Nietkörper 1 die Arretiernasen 20 in Querschenkel der Freimachungen 6 eingerastet, wobei die Federzungen 7 durch Einwirken der Einwirkenden 25 der Seitenwangen 10 auf die Einwirkflächen 26 wenigstens bündig zu der Außenseite der Versenksäule 3 so weit nach innen gebogen sind, dass die Rastnasen 8 aus dem Eingriff mit dem Trägerteil 23 gelöst sind.

In dieser Freigabestellung ist die erfindungsgemäße Vorrichtung nunmehr im wesentlichen kräftefrei durch Ziehen an dem über die Kopfplatte 2 überstehenden Handhabungsende 17 aus der Anordnung von Trägerteil 23 und Anbauteil 24 entnehmbar, so dass Beschädigungen an dem Anbauteil 24 ausgeschlossen sind.

## Patentansprüche

1. Vorrichtung zum Befestigen eines Anbauteiles (24) an einem Trägerteil (23) mit einem Nietkörper (1), der eine Kopfplatte (2) und eine an der Kopfplatte (2) angeformte Versenksäule (3) aufweist, an der an elastisch federnden, einander gegenüberliegenden Federzungen (7) nach außen vorstehende Rastnasen (8) ausgebildet sind, und mit einem in dem Nietkörper (1) verschiebbaren Verschiebestift (9), der in einer Fixierstellung das Einfedern der Rastnasen (8) nach innen blockiert, wobei in einer auch nur teilweise eingeschobenen Anordnung des Verschiebestiftes (9) die Rastnasen (8) nach außen vorstehen und zum Hintergreifen eines Trägerteiles (23) eingerichtet sind, dadurch gekenntzeichnet, dass an jeder Federzunge (7) wenigstens eine Manipufationsnase (13, 14) angesetzt ist, die eine von der Federzunge (7) wegweisend in Richtung der Kopfplatte (2) ansteigende Einwirkfläche (26) aufweist, dass an dem Verschiebestift (9) für jede Manipulationsnase (13, 14) eine Aufnahmenut (18, 22) ausgebildet ist, in der die Manipulationsnasen (13, 14) in einer Montageausrichtung des Verschiebestiftes (9) in Bezug auf den Nietkörper (1) unter Blockieren der Federzungen (7) am Einfedern angeordnet sind, und dass an dem Verschiebestift (9) Einwirkelemente (25) vorhanden sind, die in einer Demontageausrichtung des Verschiebestiftes (9) derart auf die Manipulationsnasen (13, 14) einwirken, dass die Federzungen (7) so weit nach innen gebogen sind, dass die Rastnasen (8) außenseitig wenigstens bündig mit der Versenksäule (3) eingefedert sind.

2. Vorrichtung nach Anspruch 1, **dadurch gekennzeichnet, dass** an einer Federzungen (7) eine mittig angeordnete Manipulationsnase (13) und an der anderen Federzunge (7) beidseitig der mittig angeordneten Manipulationsnase (13) seitliche Manipulationsnasen (14) ausgebildet sind.

3. Vorrichtung nach Anspruch 2, **dadurch gekennzeichnet, dass** der Verschiebestift (9) zwei in einem Abstand einander gegenüberliegende Seitenwangen (10) und einen sich zwischen den Seitenwangen (10) erstreckenden Mittelsteg (11) aufweist.

4. Vorrichtung nach Anspruch 3, **dadurch gekennzeichnet, dass** auf einer Seite des Mittelsteges (11) an jeder Seitenwange (10) jeweils ein Seitenblock (16) und auf der anderen Seite des Mittelsteges (11) an dem Mittelsteg (11) ein Mittelblock (21) angeformt sind, wobei zwischen den Seitenblöcken (16) sowie zwischen den Seitenwangen (10) und dem Mittelblock (21) die Aufnahmenuten (18, 22) ausgebildet sind.

5. Vorrichtung nach einem der Ansprüche 1 bis 4, **dadurch gekennzeichnet, dass** jedem freien Ende einer Federzunge (7) eine Freimachung (6) ausgebildet ist und dass an dem Verschiebestift (9) einander gegenüberliegende Arretiernasen (20) ausgebildet sind, die in der Demontageausrichtung in einer Freigabestellung in die Freimachungen (6) eingreifen.

6. Vorrichtung nach Anspruch 5, **dadurch gekennzeichnet, dass** in dem Nietkörper (1) Gleitnuten (15) ausgebildet sind, in denen die Arretiernasen (20) in der Montageausrichtung angeordnet sind.

## Claims

1. Device for fixing an attachment (24) to a supporting part (23) with a rivet body (1) which comprises a top plate (2) and, moulded onto the top plate (2), a driving-in column (3), at which outwardly projecting locking lugs (8) are provided at elastically sprung tongues (7) which are arranged opposing one another, also comprising a displacement peg (9) which is displaceable in the rivet body (1) and which, in a fixing position, blocks the inward flexing of the locking lugs (8), wherein in a merely partially inserted arrangement of the displacement peg (9), the locking lugs (8) project outwardly and are arranged for engaging behind a supporting part (23), **characterised in that** attached to each sprung tongue (7) is at least one manipulation lug (13, 14) which has an active surface (26) which faces away from the sprung tongue (7) rising in the direction toward the top plate (2), that formed at the displacement peg (9) for each manipulation lug (13, 14) is a receptacle groove (18, 22) in which the manipulation lugs (13, 14) are arranged in an assembly orientation of the displacement peg (9) in relation to the rivet body (1), blocking the sprung tongues (7) during elastic compression, and that provided at the displacement peg (9) are active elements (25) which, in a disassembly orientation of the displacement peg (9), act against the manipulation lugs (13, 14) such that the sprung tongues (7) are bent inwardly so far that the locking lugs (8) are flexed inwardly at least flush with the driving-in column (3) at the outside.

2. Device according to claim 1, **characterised in that** a centrally arranged manipulation lug (13) is arranged at one sprung tongue (7) and lateral manipulation lugs (14) are arranged at the other sprung tongue (7) on either side of the centrally arranged manipulation lug (13).

3. Device according to claim 2, **characterised in that** the displacement peg (9) comprises two side cheeks (10) arranged spaced apart and opposing one another, and a central web (11) extending between the side cheeks (10).

4. Device according to claim 3, **characterised in that** at one side of the central web (11), moulded onto each side cheek (10) is a side block (16) and, at the other side of the central web (11), moulded onto the central web (11) is a central block (21), wherein the receptacle grooves (18, 22) are arranged between the side blocks (16) and between the side cheeks (10) and the central block (21).

5. Device according to one of the claims 1 to 4, **characterised in that** a clearance (6) is provided at each free end of a sprung tongue (7) and that provided at the displacement peg (9) are mutually opposed detent lugs (20) which, in the disassembly orientation and in a releasing position, engage in the clearances (6).

6. Device according to claim 5, **characterised in that**, provided in the rivet body (1), are sliding grooves (15) in which the detent lugs (20) are arranged when in the assembly orientation.

## Revendications

1. Dispositif de fixation d'un composant associé (24) sur un élément porteur (23), comprenant un corps creux de rivet (1), qui se compose d'une plaque formant tête (2) et d'une colonne à enfoncer en position (3) réalisée solidaire par moulage de la plaque formant tête (2), qui comporte, sur des languettes souples capables de céder par réaction élastique (7) se faisant respectivement face, des ergots d'encastrement (8) faisant saillie vers l'extérieur, et une tige amovible (9) destinée à être insérée dans le corps creux de rivet (1) qui, dans une position d'immobilisation en position, empêche les ergots d'encastrement (8) de céder vers l'intérieur par déformation élastique, dans lequel, même si la tige amovible (9) n'est que partiellement engagée dans sa position d'insertion, les ergots d'encastrement (8) font saillie vers l'extérieur et sont agencés pour venir cramponner par derrière un élément porteur (23), **caractérisé en ce qu'**il est prévu, disposé attenant à chaque languette élastique (7), au moins un ergot de manoeuvre (13, 14) qui comporte une face d'actionnement présentant, en partant de la languette élastique (7), une pente ascendante orientée vers l'extérieur dans la direction de la plaque formant tête (2), **en ce qu'**il est prévu, dans la tige amovible (9), pour chaque ergot de manoeuvre (13, 14), une gorge de réception (18, 22), dans laquelle sont disposés les ergots de manoeuvre (13, 14) dans la direction du montage de la tige amovible (9) par rapport au corps creux de rivet (1), les languettes élastiques (7) étant en l'occurrence empêchées de céder vers l'intérieur par réaction élastique, et **en ce que** la tige amovible (9) est pourvue d'organes d'actionnement (25) qui, dans la direction de démontage de la tige amovible (9), agissent sur les ergots de manoeuvre (13, 14) de telle façon que les languettes élastiques sont repliées vers l'intérieur dans une proportion telle que les ergots d'encastrement (8) sont en position rentrée par effet de cèdage élastique, en étant à l'extérieur au moins en affleurement de la colonne à enfoncer en position (3).

2. Dispositif selon la revendication 1, **caractérisé en ce qu'**il est prévu, sur une languette élastique (7), un ergot de manoeuvre (13) disposé dans la portion centrale de celle-ci et sur l'autre languette élastique (7) des ergots de manoeuvre latéraux (14) disposés de part et d'autre de l'ergot de manoeuvre à disposition centrale (13).

3. Dispositif selon la revendication 2, **caractérisé en ce que** la tige amovible (9) comporte deux parois latérales (10) diamétralement opposées, respectivement disposées avec un certain intervalle d'écartement, et une barrette entretoise médiane (11) s'étendant entre les parois latérales (10).

4. Dispositif selon la revendication 3, **caractérisé en ce que** sur un côté de la barrette entretoise (11) sont respectivement réalisés solidaires par moulage, sur chaque paroi latérale (10) un plot de rive (16) et sur l'autre côté de la barrette entretoise médiane (11), sur ladite barrette entretoise médiane (11), un plot central (21), les gorges de réception (18, 22) étant en l'occurrence ménagées entre les plots de rive (16) ainsi qu'entre les parois latérales (10) et le plot central (21).

5. Dispositif selon l'une des revendications 1 à 4, **caractérisé en ce qu'**un dégagement (6) est prévu au niveau de l'extrémité libre de chaque languette élastique (7) et **en ce que** la tige amovible (9) comporte des ergots de blocage en position (20) à disposition diamétralement opposée, qui viennent s'insérer, dans une position de libération, dans la direction du démontage, en prise d'encastrement dans les dégagements (6).

6. Dispositif selon la revendication 5, **caractérisé en ce que** le corps creux de rivet (1) est muni de rainures de glissement (15) dans lesquelles les ergots de blocage en position (20) sont disposés dans la direction du montage.
